# EUROPEAN PATENT SPECIFICATION

(11) **EP 4 649 439 B1**
(45) Date of publication and mention of the grant of the patent: **21.10.2026**
(21) Application number: 23916536.8
(22) Date of filing: 12.01.2023
(51) Int. Cl.: G06Q 20/40, G06Q 20/14, G06Q 20/32, G06Q 20/16, G06Q 20/12, H04L 9/40

(54) **ONE-STOP MERCHANT INTEGRATED MOBILE PAYMENT EXPERIENCE**
HÄNDLERINTEGRIERTE MOBILE ZAHLUNGSERFAHRUNG MIT EINEM SCHRITT
EXPÉRIENCE CENTRALISÉE DE PAIEMENT MOBILE INTÉGRÉ À UN COMMERÇANT

(43) Date of publication of application: 19.11.2025
(73) Proprietor: Visa International Service Association, San Francisco, California 94128 (US)
(72) Inventor: UCHIL, Mrudul, Bangalore Karnataka 560103 (IN); NILESH, Shakti, Bangalore Karnataka 560066 (IN)
(74) Representative: EIP
(86) International application number: PCT/US2023/060517
(87) International publication number: WO 2024/151309

(56) References cited:
- EP-A1- 2 947 615
- US-A1- 2008 010 215
- US-A1- 2019 272 525
- US-A1- 2022 067 819
- US-B1- 8 417 633
- US-B2- 10 223 688

## Description

### TECHNICAL FIELD

The present disclosure concerns integrated payment transaction systems, e-commerce transaction interfaces, and facilitating computationally-based methods of providing payment methods to users. In particular, the technologies herein disclose a one-stop merchant integrated mobile payment solution involving unified interface providers.

### BACKGROUND ART

Document US 2022/067819 A1 discloses methods and systems for recovering a failed payment processing request. Method includes receiving, by a server system associated with a payment network, a transaction recovery request signal initiated from a User Interface (UI) of a merchant application running on a user device for recovering a payment transaction failed due to a disconnection between the server system and a merchant server. The request signal includes a unique ID associated with the payment transaction. The method includes electronically retrieving a corresponding transaction information stored against the unique ID. The transaction information includes a transaction status. The unique ID is sent in advance by the merchant server along with a transaction amount. The method includes identifying the transaction status as an approved payment transaction. The method includes sending a confirmation notification signal including the transaction status to the merchant server. The merchant server is configured to complete the payment transaction. The user entered pin is transmitted via the acquirer to the issuer.

Document EP2947615 A1 discloses an electronic payment system which has a mobile electronic payment device that is provided with a payment gateway, where mobile electronic payment device is integrated to a platform services server and alternative online payment providers.

### SUMMARY

In one aspect, the present disclosure provides a computer implemented method for an automated uniform transaction experience facilitated by an acquirer, the method comprising receiving, by the acquirer, a data object representing a selection of a payment provider by a user on a user device to conduct a payment transaction on behalf of the user with an merchant during a live transaction between the merchant and the user device, the data object comprising a first unique identifier associated with the user; a second unique identifier associated with the payment provider; and transaction information associated with the live transaction; establishing, by the acquirer, an encrypted connection between the acquirer and the payment provider, the encrypted connection maintained until completion of the payment transaction; pushing, by the acquirer, over the encrypted connection, the data object to the payment provider; receiving, by the acquirer over the encrypted connection, a transaction-approval request from the payment provider based on the data object; pushing, by the acquirer, the transaction-approval request via an online merchant to the user device for display as a push notification; pushing, by the acquirer over the encrypted connection, a user response to the transaction-approval request, to the payment provider; receiving, by the acquirer over the encrypted connection, an authentication request from the payment provider; pushing, by the acquirer over the encrypted connection, user authentication-verification information to the payment provider to complete the payment transaction; and pushing, by the acquirer via the merchant, to the user device a message indicating completion of the payment transaction to display as a push notification on the user device.

In various aspects, the present disclosure further provides the computer implemented method, wherein the transaction information comprises at least one of a transaction amount or an item information, wherein the item information describes at least one of a good or a service for sale or purchase. The method may further comprise receiving, by the acquirer, a response to a transaction-approval request from the user device. The method may also comprise receiving, by the acquirer, the user authentication-verification information from the user device. In various aspects the user authentication-verification information comprises a personal identification number (PIN) number associated with the payment provider. The computer implemented method may further comprise pulling, by the acquirer, via the merchant, identifiers of payment providers registered on the user device. In several aspects the method may further comprise sending, by the acquirer, information to the user device to display the payment providers registered on the user device. In various aspects the computer implemented method may further comprise receiving, by the acquirer, over the encrypted connection, confirmation of successful completion of the payment transaction from the payment provider; and terminating, by the acquirer, the encrypted connection between the acquirer and the payment provider.

In various aspects the present disclosure provides a user device comprising a wireless interface in communication with a merchant platform, wherein the merchant platform comprises an integrated acquirer; a processor in communication with the wireless interface; and a memory in communication with the processor, the memory comprises a mobile application, wherein the mobile application comprises instructions to be executed by the processor, comprising displaying, on a user interface, a plurality of selectable payment options, each payment option of the plurality of selectable payment options representing a payment provider; pushing, a data object, representing a user selection of a payment option of the plurality of selectable payment options, to a merchant platform during a transaction between the merchant platform and the user device, the data object comprising: a first unique identifier associated with a user; and a second unique identifier associated with the payment provider; displaying, on the user interface, a received push notification from the merchant platform, wherein the received push notification comprises a transaction-approval request; pushing a user response to the transaction-approval request to the merchant platform; displaying, on the user interface, a received authentication-verification request; and pushing entered user authentication-verification information in response to the received authentication-verification request to the merchant platform.

In various aspects of the present disclosure, the displaying of the received authentication-verification request comprises displaying a personal identification number (PIN) code entry screen. In various aspects the mobile application comprises instructions for receiving a user selection of a payment option of the plurality of selectable payment options. The mobile application further may comprise instructions for receiving a user approval of the transaction-approval request. The mobile application may further comprise instructions for receiving confirmation of an approved transaction from the merchant platform. The instructions may also comprise displaying a push notification message indicating completion of a payment transaction on the user interface. The mobile application of the user device may further comprise instructions for providing identifiers of payment providers registered on the user device to display the payment providers as the selected payment options during the transaction between the user device and the merchant platform.

In various aspects, the present disclosure provides a payment transaction system; the payment transaction system comprising a merchant portal to facilitate transactions; a user device in communication with the merchant portal, wherein the user device is associated with a user; a payment provider connected to a plurality of financial institutions, wherein the user is associated with the payment provider via a user account, wherein the user device displays the payment provider as a payment option during a transaction with the merchant portal; and an acquirer associated with the merchant portal to facilitate payments of users undertaking the transaction with the merchant portal, the acquirer connected to the payment provider to facilitate a payment for the transaction to be completed by the payment provider on behalf of the user, the acquirer configured to: receive a data object representing a selection of the payment provider by the user on the user device, the data object comprising a first unique identifier associated with the user; a second unique identifier associated with the payment provider; and transaction information associated with the transaction; establish an encrypted connection with the payment provider; push, over the encrypted connection, the data object to the payment provider; receive, over the encrypted connection, a transaction-approval request from the payment provider based on the data object; push, the transaction-approval request via the merchant portal to the user device for display as a push notification; push, over the encrypted connection, a user response, to the transaction-approval request conducted on a client device, to the payment provider; receive, over the encrypted connection, an authentication request from the payment provider; and push, over the encrypted connection, user authentication-verification information to the payment provider to complete a payment transaction.

In various aspects of the present disclosure, the acquirer of the payment transaction system is further configured to undertake at least one of receive, by the acquirer, a response to a transaction-approval request from the user device; receive, by the acquirer, the user authentication-verification information from the user device; and push, to the user device, a message indicating completion of the payment transaction to display as a push notification on the user device. Furthermore, the present disclosure may provide the payment transaction system wherein the acquirer is integrated with the merchant portal as an SDK of the merchant portal. The payment transaction system can in several aspects be configured to pull, identifiers of payment providers to determine registered payment providers on the user device. The user device can also be configured to display the registered payment providers as payment options during at least a portion of the payment transaction.

The invention is set out in the appended set of claims.

### BRIEF DESCRIPTION OF THE DRAWINGS

In the description, for purposes of explanation and not limitation, specific details are set forth, such as particular aspects, procedures, techniques, etc. to provide a thorough understanding of the present technology. However, it will be apparent to one skilled in the art that the present technology may be practiced in other aspects that depart from these specific details.

The accompanying drawings, where like reference numerals refer to identical or functionally similar elements throughout the separate views, together with the detailed description below, are incorporated in and form part of the specification, and serve to further illustrate aspects of concepts that include the claimed disclosure and explain various principles and advantages of those aspects.

The systems and methods disclosed herein have been represented where appropriate by conventional symbols in the drawings, showing only those specific details that are pertinent to understanding the various aspects of the present disclosure so as not to obscure the disclosure with details that will be readily apparent to those of ordinary skill in the art having the benefit of the description herein.
FIG. 1 illustrates a high-level architecture diagram of the system to provide a one-stop merchant integrated mobile payment solution, according to at least one aspect of the present disclosure.
FIG. 2 illustrates a flow diagram user interface of a user device that provides an integrated mobile payment experience, according to at least one aspect of the present disclosure.
FIG. 3 illustrates a logic flow diagram of a method to provide an integrated mobile payment solution via an acquirer, according to at least one aspect of the present disclosure.
FIG. 4 illustrates a logic flow diagram of a method to provide an integrated mobile payment experience on a user or mobile device, according to at least one aspect of the present disclosure.
FIG. 5A-5B illustrates the relationship between various components of the system to provide an integrated mobile payment solution, according to at least one aspect of the present disclosure.
FIG. 6 presents a block diagram of a computer apparatus, according to at least aspect of the present disclosure.
FIG. 7 is a diagrammatic representation of an example system that includes a host machine within which a set of instructions to perform any one or more of the methodologies discussed herein may be executed, according to at least aspect of the present disclosure.

### DESCRIPTION

The following disclosure may provide exemplary systems, devices, and methods for conducting a financial transaction and related activities. Although reference may be made to such financial transactions in the examples provided below, aspects are not so limited. That is, the systems, methods, and apparatuses may be utilized for any suitable purpose.

Before discussing specific embodiments, aspects, or examples, some descriptions of terms used herein are provided below.

An "acquirer" may refer to an entity licensed by the transaction service provider and/or approved by the transaction service provider to originate transactions (e.g., payment transactions) using a portable financial device associated with the transaction service provider. Acquirer may also refer to one or more computer systems operated by or on behalf of an acquirer, such as a server computer executing one or more software applications (e.g., "acquirer server"). An "acquirer" may be a merchant bank, or in some cases, the merchant system may be the acquirer or incorporate an acquirer such as an integrated acquirer. The transactions may include original credit transactions (OCTs) and account funding transactions (AFTs). The acquirer may contract with payment facilitators to enable the facilitators to sponsor merchants. The acquirer may monitor compliance of the payment facilitators in accordance with regulations of the transaction service provider. The acquirer may conduct due diligence of payment facilitators and ensure that proper due diligence occurs before signing a sponsored merchant. Acquirers may be liable for all transaction service provider programs that they operate or sponsor. Acquirers may be responsible for the acts of its payment facilitators and the merchants it or its payment facilitators sponsor.

"Authentication" is a process by which the credential of an endpoint (including but not limited to applications, people, devices, process, and systems) can be verified to ensure that the endpoint is who they are declared to be.

A "user" may include an individual or a user that may be associated with one or more personal accounts and/or consumer devices. The user may also be referred to as a cardholder, account holder, or user.

The terms "client device" and "user device" refer to any electronic device that is configured to communicate with one or more servers or remote devices and/or systems. A client device or a user device may include a mobile device, a network-enabled appliance (e.g., a network-enabled television, refrigerator, thermostat, and/or the like), a computer, a POS system, and/or any other device or system capable of communicating with a network. A client device may further include a desktop computer, laptop computer, mobile computer (e.g., smartphone), a wearable computer (e.g., a watch, pair of glasses, lens, clothing, and/or the like), a cellular phone, a network-enabled appliance (e.g., a network-enabled television, refrigerator, thermostat, and/or the like), a point of sale (POS) system, and/or any other device, system, and/or software application configured to communicate with a remote device or system. As used herein, the terms "client" in "client device" may refer to a user or customer interacting with a merchant, or it may refer to an entity (e.g., a merchant, an acquirer, and/or the like) that owns, utilizes, and/or operates a client device for initiating transactions (e.g., for initiating transactions with a transaction service provider).

As used herein, the term "computing device" or "computer device" may refer to one or more electronic devices that are configured to directly or indirectly communicate with or over one or more networks. A computing device may be a mobile device, a desktop computer, and/or the like. As an example, a mobile device may include a cellular phone (e.g., a smartphone or standard cellular phone), a portable computer, a wearable device (e.g., watches, glasses, lenses, clothing, and/or the like), a personal digital assistant (PDA), and/or other like devices. The computing device may not be a mobile device, such as a desktop computer. Furthermore, the term "computer" may refer to any computing device that includes the necessary components to send, receive, process, and/or output data, and normally includes a display device, a processor, a memory, an input device, a network interface, and/or the like.

As used herein, the term "merchant" may refer to one or more individuals or entities (e.g., operators of retail businesses that provide goods and/or services, and/or access to goods and/or services, to a user (e.g., a customer, a consumer, a customer of the merchant, and/or the like) based on a transaction (e.g., a payment transaction)). As used herein "merchant system" may refer to one or more computer systems operated by or on behalf of a merchant, such as a server computer executing one or more software applications.

A "merchant application" may include any application associated with a relying party to a transaction. For example, a merchant mobile application may be associated with a particular merchant or may be associated with a number of different merchants. In some embodiments or aspects, the merchant mobile application may store information identifying a particular merchant server computer that is configured to provide a sales environment in which the merchant server computer is capable of processing remote transactions initiated by the merchant application. Further, the merchant mobile application may also include a general purpose browser or other software designed to interact with one or more merchant server computers. In some cases, the merchant mobile application may be installed in the general purpose memory of a user device and thus, may be susceptible to malicious attacks. A merchant may also utilize a "merchant website", a "merchant platform", or other type of "merchant portal" or e-commerce service, for the same functions provided by a merchant application. All of these are collectively referred to herein as a "merchant platform".

An "interface" may include any software module configured to process communications. For example, an interface may be configured to receive, process, and respond to a particular entity in a particular communication format. Further, a computer, device, and/or system may include any number of interfaces depending on the functionality and capabilities of the computer, device, and/or system. In some embodiments or aspects, an interface may include an application programming interface (API) or other communication format or protocol that may be provided to third parties or to a particular entity to allow for communication with a device. Additionally, an interface may be designed based on functionality, a designated entity configured to communicate with, or any other variable. For example, an interface may be configured to allow for a system to field a particular request or may be configured to allow a particular entity to communicate with the system.

An "issuer" can include a payment account issuer. The payment account (which may be associated with one or more payment devices) may refer to any suitable payment account (e.g., credit card account, a checking account, a savings account, a merchant account assigned to a consumer, or a prepaid account), an employment account, an identification account, an enrollment account (e.g., a student account), etc.

A "transaction" includes the process of any exchange of goods of services between one entity, such as a user, and another entity, such as a merchant. A transaction may include the sale, purchase, lease of any good or service. A transaction may be a process undertaken on various computing devices and systems to complete the exchange of goods and services. A payment transaction meanwhile represents a transfer of value from one account to another, or between two accounts, wherein one of the accounts may belong to one entity, such as a user, and the other account may belong to another entity, such as a merchant. A payment transaction may be conducted as part of a transaction, for example, a payment transaction may be used to transfer value from one entity to another to complete a transaction. As used herein, a transaction may include sale an "online purchase" can be the purchase of a digital or physical item or service via a network, such as the Internet. It may be conducted on or via a merchant platform.

A "transaction amount" may be the price assessed to the consumer for the transaction or the value exchanged in a transaction payment.

The term "transaction data" or "transaction information" may include any data associated with one or more transactions. In some embodiments or aspects, the transaction data may merely include an account identifier (e.g., a PAN) or payment token. Alternatively, in other embodiments or aspects, the transaction data may include any information generated, stored, or associated with a merchant, consumer, account, or any other related information to a transaction. For example, transaction data may include data in an authorization request message that is generated in response to a payment transaction being initiated by a consumer with a merchant. Alternatively, transaction data may include information associated with one or more transactions that have been previously processed and the transaction information has been stored on a merchant database or other merchant computer. The transaction data may include an account identifier associated with the payment instrument used to initiate the transaction, consumer personal information, products or services purchased, or any other information that may be relevant or suitable for transaction processing. Additionally, the transaction information may include a payment token or other tokenized or masked account identifier substitute that may be used to complete a transaction and protect the underlying account information of the consumer.

As used herein, the term "system" may refer to one or more computing devices or combinations of computing devices (e.g., processors, servers, client devices, software applications, components of such, and/or the like).

"User information" may include any information that is associated with a user. For example, the user information may include a device identifier of a device that the user owns or operates and/or account credentials of an account that the user holds. A device identifier may include a unique identifier assigned to a user device that can later be used to verify the user device. In some embodiments or aspects, the device identifier may include a device fingerprint. The device fingerprint may an aggregation of device attributes. The device fingerprint may be generated by a software development kit (SDK) provided on the user device using, for example, a unique identifier assigned by the operating system, an International Mobile Station Equipment Identity (IMEI) number, operating system (OS) version, plug-in version, and the like.

As used herein, the term "communication" and "communicate" may refer to the reception, receipt, transmission, transfer, provision, and/or the like of information (e.g., data, signals, messages, instructions, calls, commands, and/or the like). A communication may use a direct or indirect connection and may be wired and/or wireless in nature. As an example, for one unit (e.g., a device, a system, a component of a device or system, combinations thereof, and/or the like) to communicate with another unit means that the one unit is able to directly or indirectly receive information from and/or transmit information to the other unit. The one unit may communicate with the other unit even though the information may be modified, processed, relayed, and/or routed between the one unit and the other unit. In one example, a first unit may communicate with a second unit even though the first unit receives information and does not communicate information to the second unit. For example, a first unit may be in communication with a second unit even though the first unit passively receives data and does not actively transmit data to the second unit. As another example, a first unit may communicate with a second unit if an intermediary unit (e.g., a third unit located between the first unit and the second unit) receives information from the first unit, processes the information received from the first unit to produce processed information, and communicates the processed information to the second unit. In some non-limiting embodiments or aspects, a message may refer to a packet (e.g., a data packet, a network packet, and/or the like) that includes data. It will be appreciated that numerous other arrangements are possible.

A "communication channel" may refer to any suitable path for communication between two or more entities. Suitable communications channels may be present directly between two entities such as a payment processing network and a merchant or issuer computer, or may include a number of different entities. Any suitable communications protocols may be used for generating a communications channel. A communication channel may in some instances comprise a "secure communication channel" or a "tunnel," either of which may be established in any known manner, including the use of mutual authentication and a session key and establishment of a secure communications session. However, any method of creating a secure communication channel may be used, and communication channels may be wired or wireless, as well as long-range, short-range, or medium-range. By establishing a secure channel, sensitive information related to a payment device (such as account number, CVV values, expiration dates, etc.) may be securely transmitted between the two entities to facilitate a transaction.

A "key" may refer to a piece of information that is used in a cryptographic algorithm to transform input data into another representation. An exemplary encryption key may include a master derivation key (MDK) which may be used to generate a limited use key (LUK) that is provided to a computer device of a user. An LUK can be an encryption key that is intended for limited use (e.g., a limited number of transactions or a limited time period) and is not intended to be used for the lifetime of an account. Further details regarding LUKs can be found in U.S. Published Patent Application No. 2015/0180836, which is herein incorporated by reference in its entirety and is assigned to the same assignee as the present application. The MDK may be used to generate and provision the token, as well as, authenticate the token when used in authorization processing by validating static and variable transaction data.

As used herein, the term "server" may include one or more computing devices which can be individual, stand-alone machines located at the same or different locations, may be owned or operated by the same or different entities, and may further be one or more clusters of distributed computers or "virtual" machines housed within a datacenter. It should be understood and appreciated by a person of skill in the art that functions performed by one "server" can be spread across multiple disparate computing devices for various reasons. As used herein, a "server" is intended to refer to all such scenarios and should not be construed or limited to one specific configuration. Further, a server as described herein may, but need not, reside at (or be operated by) a merchant, a payment network, a financial institution, a healthcare provider, a social media provider, a government agency, or agents of any of the aforementioned entities. The term "server" may also refer to or include one or more processors or computers, storage devices, or similar computer arrangements that are operated by or facilitate communication and processing for multiple parties in a network environment, such as the Internet, although it will be appreciated that communication may be facilitated over one or more public or private network environments and that various other arrangements are possible. Further, multiple computers, e.g., servers, or other computerized devices, e.g., point-of-sale devices, directly or indirectly communicating in the network environment may constitute a "system," such as a merchant's point-of-sale system. Reference to "a server" or "a processor," as used herein, may refer to a previously-recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function.

Unified payment interfaces (also referred to herein as "UPI", "payment provider", "unified payment interface providers", or "payment interface provider") support widely used global payment transaction methods. These payment interface providers bring together or "unify" various payment methods, for example issuers, including banks, under one unified payment interface. An interface is defined in this document, and a UPI is a specific type of interface. UPIs may independently validate, or authenticate users and undertake payment transactions for user, when users are engaged in a transaction, including active or live transactions, with a merchant, a merchant website, portal, application, or e-commerce services (these hereinafter collectively referred to as "merchant platform" or "merchant portal"). Current systems employing UPIs validate transactions independently from a merchant platform causes live transactions or interactions between user devices and merchant platforms difficult and cumbersome.

In many instances a user on a user device, while engaging in a live transaction with a merchant platform, has to first select a UPI payment method and key-in a valid UPI ID registered with the user device, mobile number, or cellphone. The user device or mobile number may be registered with various UPIs and therefore has to in many instances remember these UPI IDs or navigate away from the user screen to find them. Because merchant platforms do not have the capability to complete payment and rely completely on the UPI to do so, the end user is forced to navigate to the UPI portal on their phone or user device, usually with a timer on the merchant portal to provide transaction and merchant details so that the UPI may approve the transaction within a predetermined time.

Therefore, currently a user leaves the merchant platform to access the UPI portal to complete or undertake the payment transaction, for example by minimizing the merchant platform displayed on the user device, and access or open a UPI application, website, portal or other platform (hereinafter collectively referred to as "UPI platform", "UPI gateway" or "UPI portal"). The UPI application may authenticate, authorize, or validate the user, user device, registered phone number, and/or the transaction with the merchant on the UPI portal, generally with the user inputting or providing merchant and transaction information to the UPI. Once the payment transaction is complete or authorized, generally the user then has to reopen or access the merchant platform again to complete the transaction itself. This process of requiring various platforms belonging to a merchant and a UPI to complete a transaction is cumbersome and causes merchant transaction time-outs, where a transaction is cancelled because a user may take too long to authorize the transaction. It could also cause failures between each UPI and merchant if a UPI does not have the merchant details correctly, or if the merchant is not registered with the UPIs correctly.

Merchant and/or transaction information may differ between each UPI platform, making it difficult for users to sync merchants and UPIs manually, having to look for, key-in or navigate through various names or merchants for example. Furthermore, UPI names or UPI details required by each merchant to accept payment from a UPI may also differ on different merchant platforms. Even if a merchant platform facilitates transfer of a user to a UPI gateway from the merchant platform, the user must nonetheless interact separately with the UPI portal.

Therefore, with current technologies, each payment interface provider or UPI connects independently with the user and/or the user UPI account via a UPI portal. A user may have accounts with multiple UPIs or UPI providers, wherein each UPI may use differing methods of authentication or validation of the user account, including different types of identifiers, including usernames, pins, authenticating mechanisms, such as biometrics, or passwords. Once a user wishes to make a payment or complete a payment transaction for a transaction they are engaged in with a merchant, including a live transaction, the user must access and interact separately with a UPI application or portal to enter or provide the requisite merchant information and/or transaction information and complete the payment.

The present disclosure provides an automated and secure multi-authentication solution, to allow the completion of a payment on a merchant platform via a real-time integrated acquirer interface or module (referred to herein as the "integrated acquirer", "acquirer", "interface", or "acquirer interface"). The presented solution does not require a user to rely on separately accessed UPI and merchant platforms or portals where one platform is for completing the transaction and the other for the payment transaction relating to the transaction. The integrated acquirer may be an acquirer software or hardware module, or an application that acts to perform the functions that an independent or separate acquirer would otherwise function. An integrated acquirer as introduced by this application may in various aspects, be integrated into the merchant platform, portal, application or service, as an SDK, or a script, or it may be a web service, the acquirer may run on the same or different servers as the merchant platform, and may be run on a central or distributed system. With the presented technologies, a user does not have to leave or navigate away from the merchant portal. The proposed solution incorporates the integrated acquirer into the merchant platform; by integrating the acquirer (referred to hereinafter as "acquirer" or "integrated acquirer") into the merchant platform, the acquirer may orchestrate the transaction between the UPI and the user or user device via the merchant portal in an encrypted and automated manner to allow the user to securely complete the transaction on the user device solely via the merchant portal.

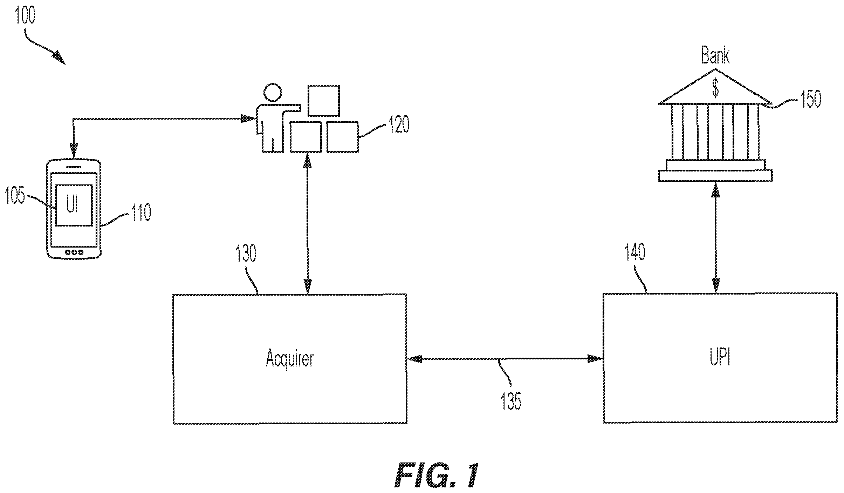

FIG. 1 illustrates a diagram representing the architecture of a system 100 to provide a one-stop merchant integrated mobile payment solution, according to at least one aspect of the present disclosure. A user may access a merchant platform 120 via a user device 110. The user device may be any computing device or computing system as described herein, and may include a user interface ("UI") 105 displayed via the display of the user device 110. Communication between the user device 110 and the merchant platform 120 may occur in either direction, wherein either one of the user device 110 or the merchant platform 120 may send and receive information, data, and instructions to each other, and communicate via at least one communication channel or mechanism. The merchant platform 120 may provide the services generally associated with a merchant including purchases, sales, and provision of goods and services. The merchant platform 120 may connect to various user devices 110 in parallel to provide services to each one independently and separately from the others.

The system 100 also includes the acquirer 130 that is directly connected to the merchant platform 120. Either one of the user device 110 or the merchant platform 120 may send and receive information, data, and instructions, and communicate via at least one communication channel or mechanism. In various aspects, the acquirer 130 may be exclusive to the merchant platform 120, and in several aspects the acquirer 130 may be an integrated acquirer that is integrated into the merchant platform 120, for example as an SDK, a web-service, and/or API interface. The user device 110 also may receive instructions or notifications, or requests from the acquirer 130 via the merchant platform 120. The UI 105 may display aspects of the merchant portal 120 as well as various instructions and notifications that are received by the user device 110 from the merchant portal 120 and/or the acquirer 130.

The acquirer 130 is connected to the UPI 140 via an encrypted channel 135. The connection or the encrypted channel 135 may be initiated by public key infrastructure (PKI) onboarding, or other encryption algorithms to support encryption of communications and data sent and received between the acquirer 130 and the UPI 140. All the data transferred over backend APIs between the merchant platform 120/acquirer 130 and the UPI 140 is over an encrypted channel with proper API security (with both authentication and authorization). The 140 UPI may provide a user to make a payment for a transaction between the user device 110 and the merchant platform 120 through a variety of issuers 150 including banks, credit card, payment agencies, brokerages, and other financial institutions. The UPI 140 and the issuers 150 may send and receive information, data, and instructions, and communicate via at least one communication channel or mechanism with one another. A user may be registered or have registered on the user device 110 multiple UPIs 140, each of which are able to connect with and act as an interface for various financial institutions and issuers 150.

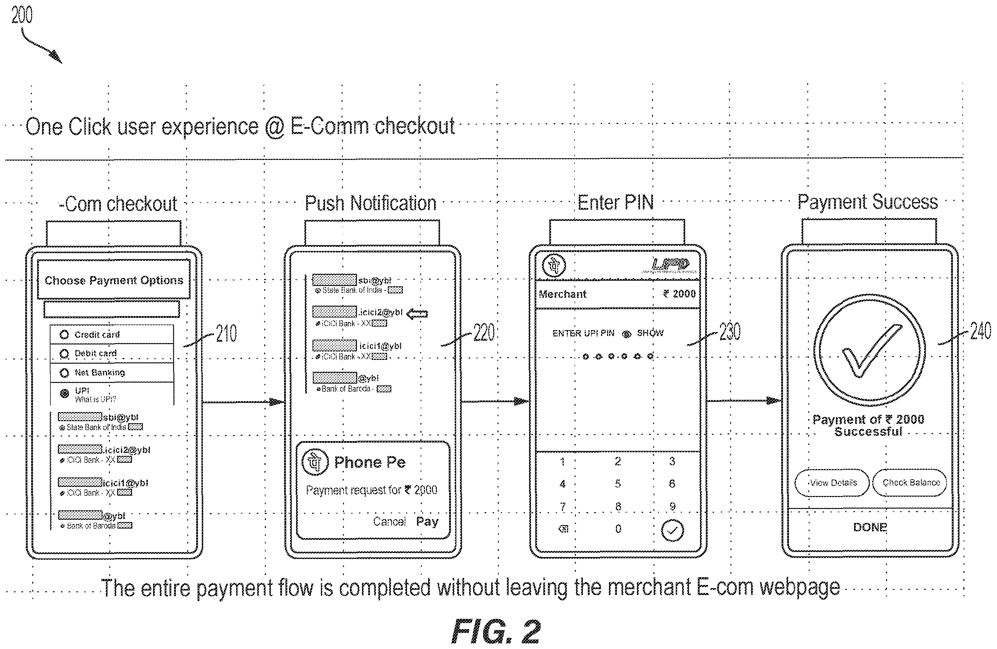

FIG. 2 illustrates a flow diagram user interface 200 of a user device that provides an integrated mobile payment experience, according to at least one aspect of the present disclosure. With reference now primarily to FIG. 2 together with FIG. 1, the user interface 200 may include several screens, notifications and displays. An e-commerce checkout screen 210 provides a user of the user device 110(FIG. 1), for example, the ability to select from various payment methods including a credit card, debit card, bank account, cryptocurrencies, and UPIs the user is registered with and are accessible via the user device 110. The e-commerce checkout screen 210 shows multiple UPIs 140(FIG. 1) that may be selected by a user to make or receive a payment during a transaction with a merchant portal 120(FIG. 1). The merchant platform 120 (FIG. 1) and/or the acquirer 130 (FIG. 1) may push a notification and present an authorization screen 220 to the user device 110 for a user to authorize a payment transaction or request.

With continued reference primarily to FIG. 2 together with FIG. 1, the user interface 200 also may include other displays and screens, including a personal identification number (PIN) or authentication screen 230 displayed on the user device 110 (FIG. 1). The authentication screen 230 may be presented to a user to authenticate their account, for example a UPI account via a pin, biometrics, a password, answering a question, or any other identifiers and authentication mechanisms. The user interface 200 also may provide or include a confirmation screen 240 to confirm or indicate a successful completion of a transaction and to notify the user of any details of the completed transaction. The confirmation screen 240 also may include options to allow a user of the user device 110 to check a balance of the issuer 150 (FIG. 1), which is connected to the UPI 140 (FIG. 1), to check or view details of a transaction, or to undertake another transaction or be provided a link to another screen of the user interface 200. The user interface 200 may receive instructions from the acquirer 130, or the merchant platform 120, and may display screens based on these received instructions. The user interface 200 also may, in some aspects, receive instructions directly from the UPI 140 if the acquirer 130 (FIG. 1) allows direct transmission. In most aspects, however, the acquirer 130 acts as an interface orchestrating communications and is able to communicate with the user device 110 to provide the acquirer 130 with instructions that the user device 110 may execute to display screens with specific or certain parameters, for example.

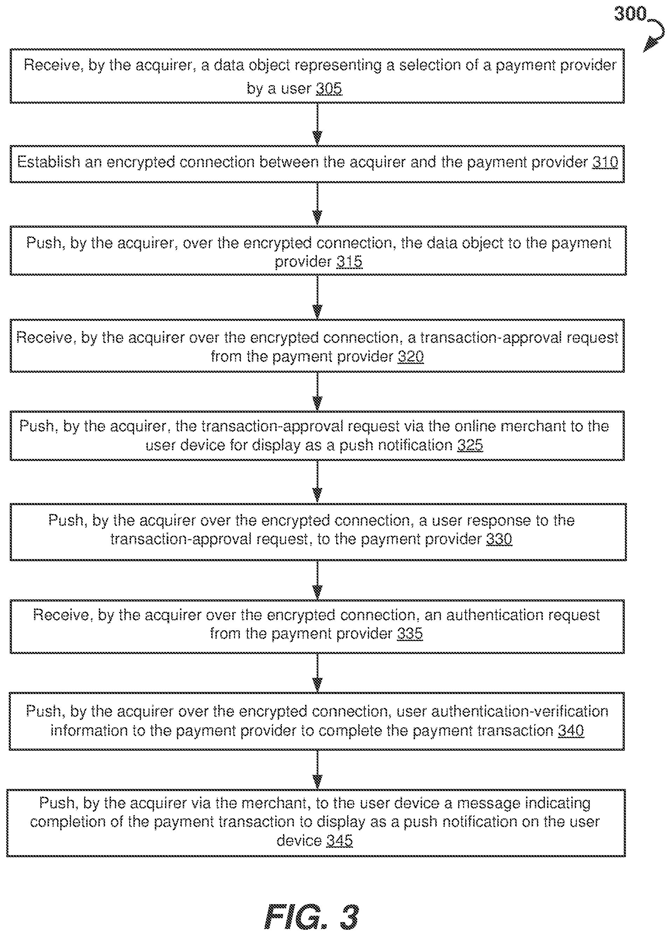

FIG. 3 illustrates a logic flow diagram of a method 300 to provide an integrated mobile payment solution via an acquirer, according to at least one aspect of the present disclosure. With reference now primarily to FIG. 3 together with FIG. 1, the method 300 may commence with the acquirer 130 (FIG. 1) receiving 305 from the user device 110 (FIG. 1) a data object, the data object representing a selection by a user of a payment provider or the UPI 140 (FIG. 1). The data object that is received by the acquirer 130 may include a unique identifier associated with the user such as, for example, a user name, account name, credentials of the user, mobile or cellphone registered number, or other credentials associating the user or the user device 110 with the selected UPI 140. The data object may also in various aspects include a unique identifier associated with the UPI 140, this unique identifier may be the name, unique code, or token representing the selected payment provider or the UPI 140. The identifier associated with the UPI 140 is used by the acquirer 130 to determine the identity of the UPI 140 out of the several available UPIs, and to form a connection with the UPI 140 selected by user on the user device 110. Further, the data object may include various transaction related information or identifiers, such as the type of transaction being undertaken such as, for example, a purchase, sale, lease, financing, provisioning of goods/service, whether funds are being sent or received from the financial institution, the issuer 150 to be involved in the transaction, the type of good or service being involved in the transaction, the code(s) associated with the good and service involved, the merchant code or identifier, the availability of the good or service, transaction or payment date and/or time, the delivery time, taxes, fees, or other costs including delivery costs that may be included in the transaction. This other transaction information may be used by the UPI 140 or the specific issuer 150 involved in the transaction, to determine at least one of: the amount of payment required, the type of payment transaction, the time or date of payment or transaction, the user account of identification, associated issuers 150 with the user or user account, and the merchant involved in the transaction, for example.

With continued reference primarily to FIG. 3 together with FIG. 1, in various aspects, an encrypted connection or communication channel, for example, the communication channel 135 (FIG. 1) between the acquirer 130 (FIG. 1) and the payment provider or the UPI 140 (FIG. 1) may be established 310. In several aspects this connection may be established 310 by a key or a cryptographic algorithm including a PKI onboarding solution to enable the transfer of data and information in an encrypted and secure manner between the acquirer 130 and the UPI 140 over the encrypted communication channel. The acquirer 130 may then push 315 the received data object to the payment provider or the UPI 140 selected by the user over the encrypted connection or communication channel, e.g., communication channel 135.

With reference now primarily to FIG. 3 together with FIGS. 1 and 2, as part of a two-factor (or multi-factor) authentication process, the acquirer 130 (FIG. 1) may receive 320 over the encrypted connection, a transaction or payment transaction-approval request (an authorization request) from the payment provider or the UPI 140 (FIG. 1). In various aspects, the transaction-approval request is pushed 325 to the user device 110 (FIG. 1), via the merchant portal 120, or in other aspects, directly, to be displayed as a push notification that asks the user for approval for the transaction through the screen 220 (FIG. 2). The transaction-approval request may provide the user device 110 the transaction information as well as any of the data received or pushed 315 to the user device 110 by the acquirer 130 that identifies or determines the transaction, so that a user may employ the user device 110 to approve the payment transaction for the transaction and/or confirm transaction or payment transaction details. Subsequently, the acquirer 130 may push 330 a received response to the transaction-approval request from the user device 110. The received response approves or denies the transaction-approval request of the UPI 140 or the payment provider.

With continued reference primarily to FIG. 3 together with FIGS. 1 and 2, the second part of the two-factor authentication includes the determination that if the transaction-approval request/authorization request is approved by a user on the user device 110 (FIG. 1), the acquirer 130 (FIG. 1) receives 335 over the encrypted connection, an authentication request from the payment provider or the UPI 140 (FIG. 1). The authentication request may be a request for a PIN associated with the user or user account for the UPI 140. The acquirer 130 then pushes 340 a received authentication-verification information to the payment provider or the UPI 140 to complete the two-factor authentication process. The received authentication-verification information may be a PIN provided by the user device 110. In several embodiments, other authentication-verification information may be used in lieu of a PIN, including biometric information or passwords. Finally, upon completion of the payment transaction, the acquirer 130 pushes 345, via the merchant, and in some aspects directly, a message indicating completion of the payment transaction to be displayed as a push notification on the user device 110, as shown for example on a screen similar to the confirmation screen 240 (FIG. 2).

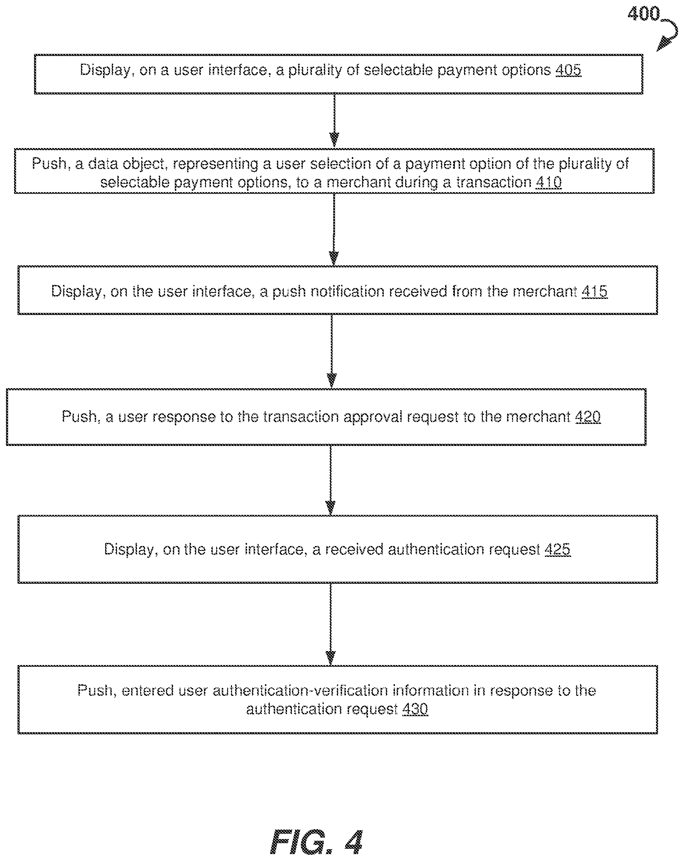

FIG. 4 illustrates a logic flow diagram of a method 400 to provide an integrated mobile payment experience on a user or mobile device, according to at least one aspect of the present disclosure. With reference now primarily to FIG. 4 together with FIG. 1, the method 400 includes displaying 405 on a user interface, for example the UI 105 (FIG. 1), a plurality of selectable payment options that may include one or more payment interface providers or UPIs 140. This display could occur during a transaction between the user device 110 (FIG. 1) and the merchant platform 120 (FIG. 1). The user device 110, may push 410 a data object, that represents a user selection of a payment option of the plurality of selectable payment options, to a merchant, the merchant platform 120, or the acquirer 130 (FIG. 1) either directly, or via the merchant platform 120, during a transaction, which, in one aspect, the transaction may be a live transaction. The data object may include a unique identifier associated with the user, for example a user name, account name, credentials of the user, mobile or cellphone registered number, or other credentials associating user or the user device 110 with the selected UPI 140. In various aspects, the data object also may include a unique identifier associated with the UPI 140. This unique identifier may be the name, unique code, or token representing the selected payment provider or the UPI 140. The identifier associated with the UPI 140 is used by the acquirer 130 to determine the identity of the UPI 140 to establish a connection with the UPI 140 selected by a user on the user device 110. Further, the data object may include various transaction related information or identifiers, such as the type of transaction being undertaken, for example, a purchase, sale, lease, financing, whether funds are being sent or received from the financial institution, the issuer 150 (FIG. 1) to be involved in the transaction, the type of good or service being involved in the transaction, the code(s) associated with the good and service involved, the merchant code or identifier, the availability of the good or service, transaction or payment date and/or time, the delivery time, taxes, fees, or other costs including delivery costs that may be included in the transaction. This other transaction information may be used by the UPI 140 or the specific issuer 150 involved in the transaction, to determine at least one of: the amount of payment required, the type of payment transaction, the time or date of payment or transaction, the user account of identification, associated issuers 150 with the user or user account, or the merchant involved in the transaction.

With reference now primarily to FIG. 4 together with FIGS. 1 and 2, the user device 110 (FIG. 1) also may display 415 a push notification received from the merchant or merchant platform, or from the acquirer 130 (FIG. 1) directly, or from the acquirer 130 via the merchant platform 120 (FIG. 1). The push notification may be part of a two-factor (or multi-factor) authentication process. The push notification may be displayed to present a transaction or payment transaction-approval (or authorization) request, for example similar to the screen 220 (FIG. 2). The transaction or payment transaction-approval request may provide the user device 110 the transaction information as well as any data that identifies or determines the transaction or payment transaction. The user device 110 may confirm the transaction or payment transaction details and approve the payment transaction and push 420 a user response to the transaction-approval request to the merchant, the merchant portal or the merchant platform 120, or the acquirer 130 from the user device 110. The second part of a multi-factor authentication may cause a display 425 on the user interface 105 (FIG. 1) of the user device 110, of an authentication request. In one aspect, the authentication request may be transmitted or received from the acquirer 130 directly, or via the merchant platform 120, and may comprise a request from a payment provider or the UPI 140. The display 425 may be a display of a PIN screen such as the PIN screen 230 (FIG. 2), or alternatively a display of any other authentication request such as a biometric, password request. Finally, a user may enter requested authentication-verification information in response to the authentication request on the UI 105 of the user device 110, whereupon the user device 110 pushes the entered authentication-verification information in response to the authentication request to the merchant platform 120, or to the acquirer 130 directly or via the merchant platform 120.

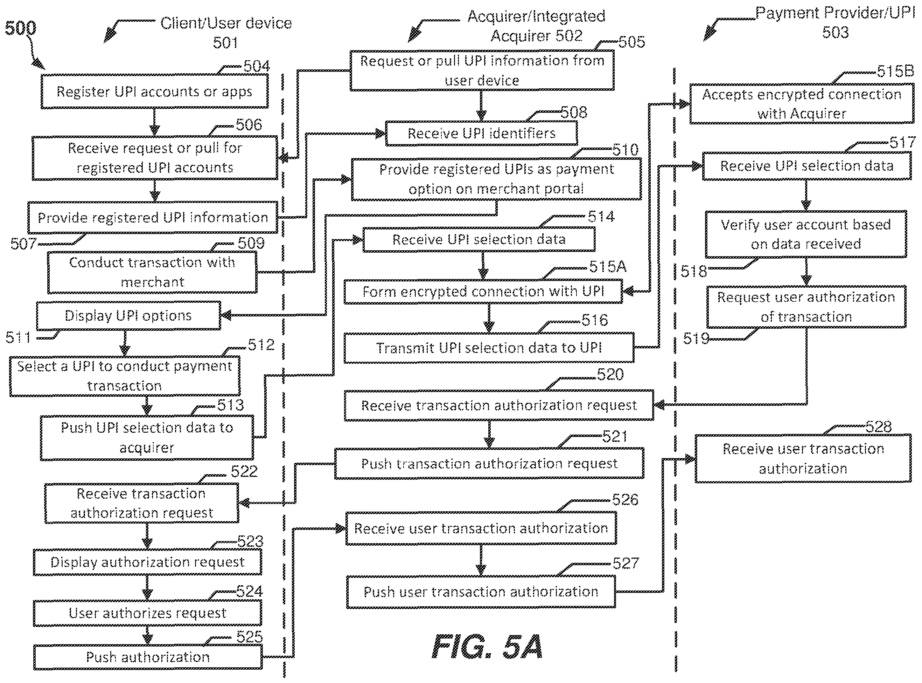

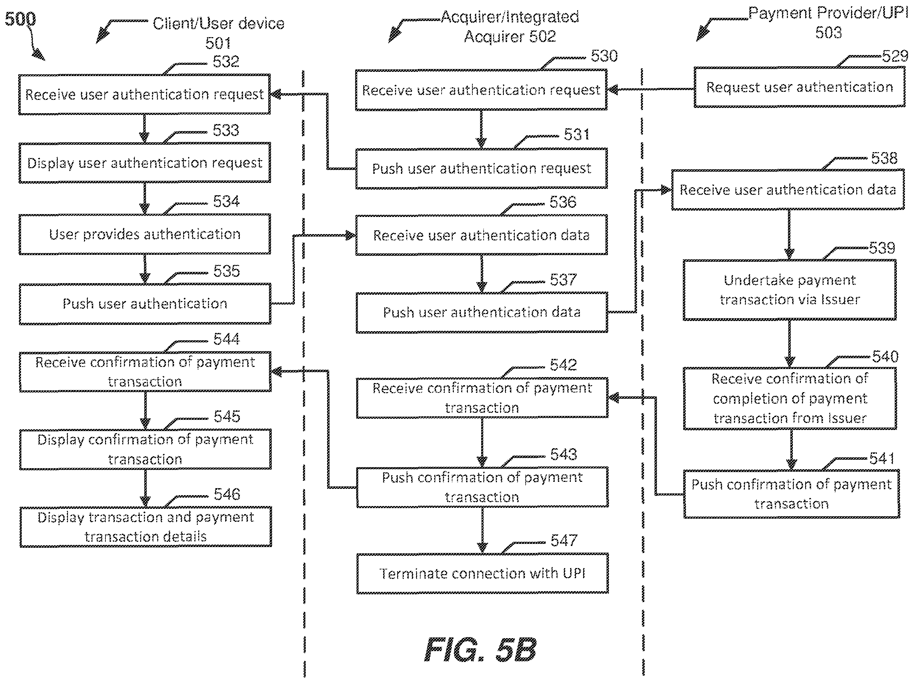

FIG. 5A-5B illustrates the relationship between various components of the system to provide an integrated mobile payment solution, according to at least one aspect of the present disclosure. With reference now primarily to FIG. 5 together with FIG. 1, the system 500 is comprised of a client or a user device 501, which may be similar to the user device 110 (FIG. 1), for example, an acquirer 502, which may be similar to the acquirer 130 (FIG. 1), and a payment provider or the UPI 503, which may be similar to the UPI 140 (FIG. 1). The acquirer 502 may be integrated into a merchant or merchant platform, similar to the merchant platform 120 (FIG. 1), for example, as an SDK, an API, or as a service that runs on a connected server. A user may register various UPI accounts, applications, or UPI platforms on the user device 501. Each UPI account or platform may have its own distinct authentication methods, identifiers, user names, and connected payment systems or issuers such as, for example, the issuers 150 (FIG. 1). The acquirer 502 may pull 505 or request 505 information and data on registered UPI accounts of platforms from the user device 501. This pull 505 may occur during a connection or transaction between the merchant platform and the user device 501 or the pull 505 may occur at other times, for example, offline, if the merchant platform 120 is installed as an application or otherwise connected to the user device 501. The pull 505 of registered UPI information on the user device 501 may occur in the background via the merchant platform 120 or application that incorporates the integrated acquirer 502. The pull 505 also may occur in the form of a request for information, especially if the integrated acquirer 502 or the merchant platform incorporating the integrated acquirer 502 does not have permission to access the information. In several aspects, the user device 501 receives 506 the request for registered UPI accounts and may provide 507 the registered UPI account information to the integrated acquirer 502, the acquirer 502 receives the UPI account information including any associated user data and other relevant identifiers, such as user account credentials, user names, account names, types of accounts, mechanisms to connect to each UPI and the like.

With continued reference primarily to FIG. 5 together with FIGS. 2-4, the user device 501 may be employed to conduct 509 a transaction with a merchant, for example in an online environment. When a connection is established between a merchant platform and the user device 501, the UPI identifiers received 508 by the acquirer 502 may be provided 510 by the integrated acquirer 502 as payment methods on the merchant portal to the user on user device 501, for example on the UI 105 (FIG. 1). These provided UPI payment methods that correspond to those registered with the user and/or the user device 501 may be displayed 511, for example, as payment methods being presented on user device on a checkout, cart screen or similar. One example of the display 511 may be an E-Com checkout screen 210 (FIG. 2). A user may then select 512 at least one of the UPI options to conduct a payment transaction for the transaction with the merchant platform. The selection of the user on the user device 501 is pushed 513 to the integrated acquirer 502 which may receive 514 the UPI selection data as one or more data objects. The receive 514 process is discussed in detail in previous figures and the data object may comprise data and information as described by the receive 305 (FIG. 3) process and the push 410 (FIG. 4) process.

With reference now primarily to FIG. 5, once the selection of the UPI is known to the acquirer 502, the acquirer 502 may establish 515A an encrypted connection with the UPI 503, which is accepted 515B by the UPI or the payment provider 503. In several aspects, the secure encrypted connection formed by during the establishment and acceptance of an encrypted connection 515A-515B may be established by a key or a cryptographic algorithm including a PKI onboarding solution to enable the transfer of data and information in an encrypted manner between the acquirer 502 and the UPI 503 over a secure encrypted communication channel. Encryption methods and keys may therefore be used to onboard the communication channel between the acquirer 502 and the UPI 503. After a secure encrypted channel is formed between the acquirer 502 and the UPI 503, ensuring that all data and communications transmitted between the acquirer 502 and the UPI 503 are securely transmitted, the acquirer 502 may transmit 516 or push the UPI selection data to the UPI 503 which receives 517 the data. This data may comprise the user account information with the UPI, and may include various identifying or personal details about the user and/or user device 501 that has the UPI 503 registered to it. The data object transmitted 516 to the UPI 503 may include user data as well as any other data or information provided by the user device 501 to the acquirer 502, such as transaction data or UPI data, or any data added by the acquirer 502 which may include user, UPI, merchant or transaction data known to the integrated acquirer 502.

With continued reference to FIG. 5, once the UPI 503 verifies the data received, and is able to verify that the client device 501 or the user of the client device 501 is registered with the UPI 503, by verifying 518 user data, transaction information, and/or UPI data included in the data object or information received 517, the UPI initiates a multi-factor authentication process that begins by requesting 519 a user authorization from the acquirer 502 for the transaction. This authorization may be for the transaction, the payment transaction and any details associated with these, including and not limited to authorization for any of: the type of transaction, type of payment, the amount to be paid or received in the transaction, confirmation of merchant, confirmation of good and service to be exchanged and the like. Once the acquirer 502 receives 520 the authorization request, the acquirer pushes 521 the transaction authorization request to the user device 501.

With reference now primarily to FIG. 5 together with FIGS. 1 and 2, the user device 501 may receive 522 and display 523 on the client device 501 the first part of the multi-factor authentication and the transaction authorization request. Examples include display 523 via the UI 105 (FIG. 1), as a push notification screen 220 (FIG. 2). The request may be a simple approval that can be accepted by a user by clicking or pressing a button or via a gesture, or user command on or with the user device 501. If the user authorizes or accepts 524 the request, the user device 501 may push 525 the authorization to the acquirer 502 which receives 526 the request and pushes 527 it to the UPI 503. The first part of the multi-factor authentication process is completed upon receipt 528 of the user authorization for the transaction and/or payment transaction (or other authorizations).

With continued reference primarily to FIG. 5 together with FIGS. 1 and 2, the second part of the multi-factor authentication process may begin by the UPI 503 requesting 529 to authenticate a user on the client device 501. Authenticating a user is different from mere authorization of the transaction. For example, authentication of a user requires knowledge, biometrics, a pin, or password associated with the user and their account with the UPI 503. The authentication request is received 530 by the acquirer 502, which then pushes 531 the authentication request to the user device 501. The authentication request is received 532 by the user device 501 and may be displayed 533 by the user device 501, for example, as a PIN screen 230 (FIG. 2). The authentication process may comprise other authentication mechanisms used instead of, or in addition to, the PIN, and may be displayed 533 as a screen that requests biometric authentication from a user, a password of the UPI 503 or of a user account, an answer to a question, or any other suitable authentication mechanism. A user on the user device 501 may provide 534 authentication or a response to the authentication request of the UPI 503 by providing the correct pin, password, biometric data, or answer to a question, or other response that authenticates the user. The authentication response is pushed 535 to the integrated acquirer 502, which receives 536 the authentication data and pushes 537 the authentication data to the payment provider 503, which receives 538 the user authentication data. Once the UPI 503 is able to authenticate the user of the user device 501, with the user authentication data, the UPI 503 may undertake 539 the transaction via the issuer 150 (FIG. 1), or other financial institution. The undertaking of the payment transaction 540 may occur in various ways between the issuer 150 and the UPI 503, for example, by providing authenticated user and transaction details to the issuer 150 to provide access to funds for the transaction to a merchant. Once the transaction is complete, in various aspects the UPI 503 may receive confirmation of the completion of the payment transaction from the issuer for example, and may push 541 confirmation of payment details to the acquirer 502. The acquirer 502 may receive 542 confirmation of completion of the payment transaction and push 543 the confirmation of payment transaction to the user device 501, which upon receiving 544 the confirmation may display 545 the confirmation on the user device 501 via the UI 105, for example, as a confirmation screen 240 (FIG. 2) that also may display 546 other details including details of the transaction, the payment, and other information relevant to the user of the user device 501. Upon receiving 542 confirmation of payment transaction and pushing 543 the confirmation of completion of the payment transaction the acquirer may terminate 547 the secure encrypted connection with the UPI 503.

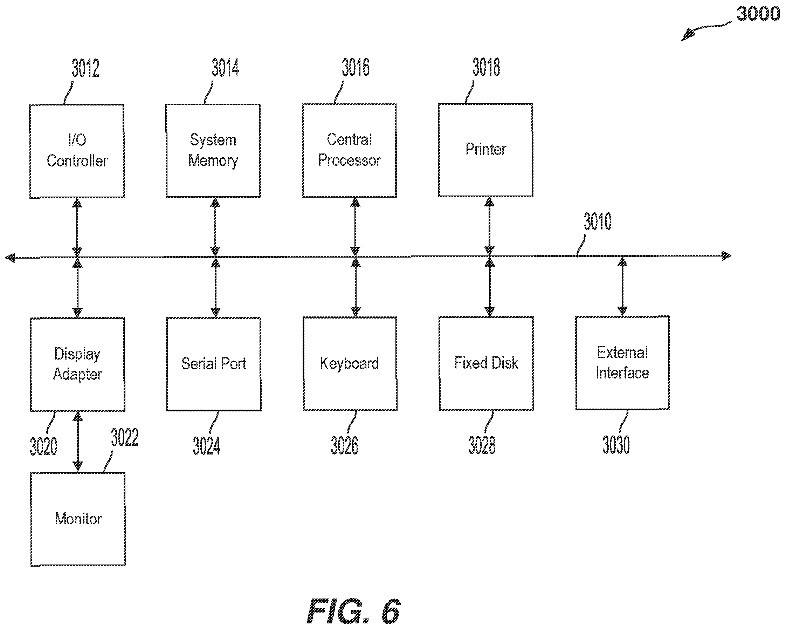

FIG. 6 is a block diagram of a computer apparatus 3000 with data processing subsystems or components, according to at least one aspect of the present disclosure. The subsystems shown in FIG. A are interconnected via a system bus 3010. Additional subsystems such as a printer 3018, keyboard 3026, fixed disk 3028 (or other memory comprising computer readable media), monitor 3022, which is coupled to a display adapter 3020, and others are shown. Peripherals and input/output (I/O) devices, which couple to an I/O controller 3012 (which can be a processor or other suitable controller), can be connected to the computer system by any number of means known in the art, such as a serial port 3024. For example, the serial port 3024 or external interface 3030 can be used to connect the computer apparatus to a wide area network such as the Internet, a mouse input device, or a scanner. The interconnection via system bus allows the central processor 3016 to communicate with each subsystem and to control the execution of instructions from system memory 3014 or the fixed disk 3028, as well as the exchange of information between subsystems. The system memory 3014 and/or the fixed disk 3028 may embody a computer readable medium.

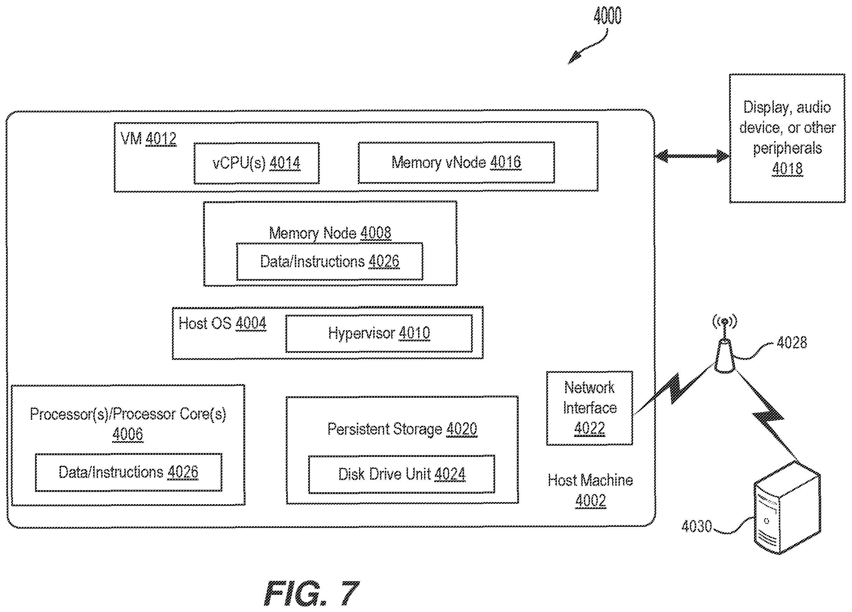

FIG. 7 is a diagrammatic representation of an example system 4000 that includes a host machine 4002 within which a set of instructions to perform any one or more of the methodologies discussed herein may be executed, according to at least one aspect of the present disclosure. In various aspects, the host machine 4002 operates as a standalone device or may be connected (e.g., networked) to other machines. In a networked deployment, the host machine 4002 may operate in the capacity of a server or a client machine in a server-client network environment, or as a peer machine in a peer-to-peer (or distributed) network environment. The host machine 4002 may be a computer or computing device, a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example system 4000 includes the host machine 4002, running a host operating system (OS) 4004 on a processor or multiple processor(s)/processor core(s) 4006 (e.g., a central processing unit (CPU), a graphics processing unit (GPU), or both), and various memory nodes 4008. The host OS 4004 may include a hypervisor 4010 which is able to control the functions and/or communicate with a virtual machine ("VM") 4012 running on machine readable media. The VM 4012 also may include a virtual CPU or vCPU 4014. The memory nodes 4008 may be linked or pinned to virtual memory nodes or vNodes 4016. When the memory node 4008 is linked or pinned to a corresponding vNode 4016, then data may be mapped directly from the memory nodes 4008 to the corresponding vNode 4016.

All the various components shown in host machine 4002 may be connected with and to each other, or communicate to each other via a bus (not shown) or via other coupling or communication channels or mechanisms. The host machine 4002 may further include a video display, audio device or other peripherals 4018 (e.g., a liquid crystal display (LCD), alpha-numeric input device(s) including, e.g., a keyboard, a cursor control device, e.g., a mouse, a voice recognition or biometric verification unit, an external drive, a signal generation device, e.g., a speaker,) a persistent storage device 4020 (also referred to as disk drive unit), and a network interface device 4022. The host machine 4002 may further include a data encryption module (not shown) to encrypt data. The components provided in the host machine 4002 are those typically found in computer systems that may be suitable for use with aspects of the present disclosure and are intended to represent a broad category of such computer components that are known in the art. Thus, the system 4000 can be a server, minicomputer, mainframe computer, or any other computer system. The computer may also include different bus configurations, networked platforms, multiprocessor platforms, and the like. Various operating systems may be used including UNIX, LINUX, WINDOWS, QNX ANDROID, IOS, CHROME, TIZEN, and other suitable operating systems.

The disk drive unit 4024 also may be a Solid-state Drive (SSD), a hard disk drive (HDD) or other includes a computer or machine-readable medium on which is stored one or more sets of instructions and data structures (e.g., data/instructions 4026) embodying or utilizing any one or more of the methodologies or functions described herein. The data/instructions 4026 also may reside, completely or at least partially, within the main memory node 4008 and/or within the processor(s) 4006 during execution thereof by the host machine 4002. The data/instructions 4026 may further be transmitted or received over a network 4028 via the network interface device 4022 utilizing any one of several well-known transfer protocols (e.g., Hyper Text Transfer Protocol (HTTP)).

The processor(s) 4006 and memory nodes 4008 also may comprise machine-readable media. The term "computer-readable medium" or "machine-readable medium" should be taken to include a single medium or multiple medium (e.g., a centralized or distributed database and/or associated caches and servers) that store the one or more sets of instructions. The term "computer-readable medium" shall also be taken to include any medium that is capable of storing, encoding, or carrying a set of instructions for execution by the host machine 4002 and that causes the host machine 4002 to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example aspects described herein may be implemented in an operating environment comprising software installed on a computer, in hardware, or in a combination of software and hardware.

One skilled in the art will recognize that Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized to implement any of the various aspects of the disclosure as described herein.

The computer program instructions also may be loaded onto a computer, a server, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Suitable networks may include or interface with any one or more of, for instance, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The network 4028 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi^{®} networking.

In general, a cloud-based computing environment is a resource that typically combines the computational power of a large grouping of processors (such as within web servers) and/or that combines the storage capacity of a large grouping of computer memories or storage devices. Systems that provide cloud-based resources may be utilized exclusively by their owners or such systems may be accessible to outside users who deploy applications within the computing infrastructure to obtain the benefit of large computational or storage resources.

The cloud is formed, for example, by a network of web servers that comprise a plurality of computing devices, such as the host machine 4002, with each server 4030 (or at least a plurality thereof) providing processor and/or storage resources. These servers manage workloads provided by multiple users (e.g., cloud resource customers or other users). Typically, each user places workload demands upon the cloud that vary in real-time, sometimes dramatically. The nature and extent of these variations typically depends on the type of business associated with the user.

It is noteworthy that any hardware platform suitable for performing the processing described herein is suitable for use with the technology. The terms "computer-readable storage medium" and "computer-readable storage media" as used herein refer to any medium or media that participate in providing instructions to a CPU for execution. Such media can take many forms, including, but not limited to, non-volatile media, volatile media, and transmission media. Non-volatile media include, for example, optical or magnetic disks, such as a fixed disk. Volatile media include dynamic memory, such as system RAM. Transmission media include coaxial cables, copper wire and fiber optics, among others, including the wires that comprise one aspect of a bus. Transmission media can also take the form of acoustic or light waves, such as those generated during radio frequency (RF) and infrared (IR) data communications. Common forms of computer-readable media include, for example, a flexible disk, a hard disk, magnetic tape, any other magnetic medium, a CD-ROM disk, digital video disk (DVD), any other optical medium, any other physical medium with patterns of marks or holes, a RAM, a PROM, an EPROM, an EEPROM, a FLASH EPROM, any other memory chip or data exchange adapter, a carrier wave, or any other medium from which a computer can read.

Various forms of computer-readable media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU.

Computer program code for carrying out operations for aspects of the present technology may be written in any combination of one or more programming languages, including an object-oriented programming language such as Java, Smalltalk, C++, or the like and conventional procedural programming languages, such as the "C" programming language, Go, Python, or other programming languages, including assembly languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The foregoing detailed description has set forth various forms of the systems and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, and/or examples can be implemented, individually and/or collectively, by a wide range of hardware, software, firmware, or virtually any combination thereof. Those skilled in the art will recognize that some aspects of the forms disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as one or more program products in a variety of forms, and that an illustrative form of the subject matter described herein applies regardless of the particular type of signal bearing medium used to actually carry out the distribution.

Instructions used to program logic to perform various disclosed aspects can be stored within a memory in the system, such as dynamic random access memory (DRAM), cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, compact disc, read-only memory (CD-ROMs), and magneto-optical disks, read-only memory (ROMs), random access memory (RAM), erasable programmable read-only memory (EPROM), electrically erasable programmable read-only memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the non-transitory computer-readable medium includes any type of tangible machine-readable medium suitable for storing or transmitting electronic instructions or information in a form readable by a machine (e.g., a computer).

Any of the software components or functions described in this application, may be implemented as software code to be executed by a processor using any suitable computer language such as, for example, Python, Java, C++ or Perl using, for example, conventional or object-oriented techniques. The software code may be stored as a series of instructions, or commands on a computer readable medium, such as RAM, ROM, a magnetic medium such as a hard-drive or a floppy disk, or an optical medium such as a CD-ROM. Any such computer readable medium may reside on or within a single computational apparatus, and may be present on or within different computational apparatuses within a system or network.

As used in any aspect herein, the term "logic" may refer to an app, software, firmware and/or circuitry configured to perform any of the aforementioned operations. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in memory devices.

As used in any aspect herein, the terms "component," "system," "module" and the like can refer to a computer-related entity, either hardware, a combination of hardware and software, software, or software in execution.

As used in any aspect herein, an "algorithm" refers to a self-consistent sequence of steps leading to a desired result, where a "step" refers to a manipulation of physical quantities and/or logic states which may, though need not necessarily, take the form of electrical or magnetic signals capable of being stored, transferred, combined, compared, and otherwise manipulated. It is common usage to refer to these signals as bits, values, elements, symbols, characters, terms, numbers, or the like. These and similar terms may be associated with the appropriate physical quantities and are merely convenient labels applied to these quantities and/or states.

A network may include a packet switched network. The communication devices may be capable of communicating with each other using a selected packet switched network communications protocol. One example communications protocol may include an Ethernet communications protocol which may be capable of permitting communication using a Transmission Control Protocol/Internet Protocol (TCP/IP). The Ethernet protocol may comply or be compatible with the Ethernet standard published by the Institute of Electrical and Electronics Engineers (IEEE) titled "IEEE 802.3 Standard", published in December, 2008 and/or later versions of this standard. Alternatively or additionally, the communication devices may be capable of communicating with each other using an X.25 communications protocol. The X.25 communications protocol may comply or be compatible with a standard promulgated by the International Telecommunication Union-Telecommunication Standardization Sector (ITU-T). Alternatively or additionally, the communication devices may be capable of communicating with each other using a frame relay communications protocol. The frame relay communications protocol may comply or be compatible with a standard promulgated by Consultative Committee for International Telegraph and Telephone (CCITT) and/or the American National Standards Institute (ANSI). Alternatively or additionally, the transceivers may be capable of communicating with each other using an Asynchronous Transfer Mode (ATM) communications protocol. The ATM communications protocol may comply or be compatible with an ATM standard published by the ATM Forum titled "ATM-MPLS Network Interworking 2.0" published August 2001, and/or later versions of this standard. Of course, different and/or after-developed connection-oriented network communication protocols are equally contemplated herein.

Unless specifically stated otherwise as apparent from the foregoing disclosure, it is appreciated that, throughout the present disclosure, discussions using terms such as "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

As used herein, the term "comprising" is not intended to be limiting, but may be a transitional term synonymous with "including," "containing," or "characterized by." The term "comprising" may thereby be inclusive or open-ended and does not exclude additional, unrecited elements or method steps when used in a claim. For instance, in describing a method, "comprising" indicates that the claim is open-ended and allows for additional steps. In describing a device, "comprising" may mean that a named element(s) may be essential for an embodiment or aspect, but other elements may be added and still form a construct within the scope of a claim. In contrast, the transitional phrase "consisting of" excludes any element, step, or ingredient not specified in a claim. This is consistent with the use of the term throughout the specification.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

Reference to "a device," "a server," "a processor," and/or the like, as used herein, may refer to a previously-recited device, server, or processor that is recited as performing a previous step or function, a different server or processor, and/or a combination of servers and/or processors. For example, as used in the specification and the claims, a first server or a first processor that is recited as performing a first step or a first function may refer to the same or different server or the same or different processor recited as performing a second step or a second function.

Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

As used herein, the singular form of "a", "an", and "the" include the plural references unless the context clearly dictates otherwise.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope.

## Claims

1. A computer implemented method (300) for an automated uniform transaction experience facilitated by an acquirer, the method (300) comprising:
receiving (305), by the acquirer, a data object representing a selection of a payment provider by a user on a user device to conduct a payment transaction on behalf of the user with a merchant during a live transaction between the merchant and the user device, the data object comprising:
a first unique identifier associated with the user;
a second unique identifier associated with the payment provider; and
transaction information associated with the live transaction;
establishing (310), by the acquirer, an encrypted connection between the acquirer and the payment provider, the encrypted connection maintained until completion of the payment transaction;
pushing (315), by the acquirer, over the encrypted connection, the data object to the payment provider;
receiving (320), by the acquirer over the encrypted connection, a transaction-approval request from the payment provider based on the data object;
pushing (325), by the acquirer, the transaction-approval request via an online merchant to the user device for display as a push notification;
pushing (330), by the acquirer over the encrypted connection, a user response to the transaction-approval request, to the payment provider;
receiving (335), by the acquirer over the encrypted connection, an authentication request from the payment provider;
pushing (340), by the acquirer over the encrypted connection, user authentication-verification information to the payment provider to complete the payment transaction; and
pushing (345), by the acquirer via the merchant, to the user device a message indicating completion of the payment transaction to display as a push notification on the user device.

2. The computer implemented method (300) of Claim 1, wherein the transaction information comprises at least one of a transaction amount or an item information, wherein the item information describes at least one of a good or a service for sale or purchase.

3. The computer implemented method (300) of Claim 1 or Claim 2, further comprising:
receiving, by the acquirer, a response to a transaction-approval request from the user device.

4. The computer implemented method (300) of any preceding Claim, further comprising:
receiving, by the acquirer, the user authentication-verification information from the user device.

5. The computer implemented method (300) of any preceding Claim, wherein the user authentication-verification information comprises a personal identification number (PIN) number associated with the payment provider.

6. The computer implemented method (300) of any preceding Claim, further comprising:
pulling, by the acquirer, via the merchant, identifiers of payment providers registered on the user device.

7. The computer implemented method (300) of Claim 6, further comprising:
sending, by the acquirer, information to the user device to display the payment providers registered on the user device.

8. The computer implemented method (300) of any preceding Claim, further comprising:
receiving (542), by the acquirer, over the encrypted connection, confirmation of successful completion of the payment transaction from the payment provider; and
terminating (547), by the acquirer, the encrypted connection between the acquirer and the payment provider.

9. A user device (110) comprising:
a wireless interface in communication with a merchant platform, wherein the merchant platform comprises an integrated acquirer;
a processor in communication with the wireless interface; and
a memory in communication with the processor, the memory comprises a mobile application, wherein the mobile application comprises instructions to be executed by the processor, comprising:
displaying, on a user interface, a plurality of selectable payment options, each payment option of the plurality of selectable payment options representing a payment provider;
pushing, a data object, representing a user selection of a payment option of the plurality of selectable payment options, to a merchant platform during a transaction between the merchant platform and the user device, the data object comprising:
a first unique identifier associated with a user; and
a second unique identifier associated with the payment provider;
displaying, on the user interface, a received push notification from the merchant platform, wherein the received push notification comprises a transaction-approval request;
pushing a user response to the transaction-approval request to the merchant platform;
displaying, on the user interface, a received authentication-verification request; and
pushing entered user authentication-verification information in response to the received authentication-verification request to the merchant platform.

10. The user device (110) of Claim 9, wherein the displaying of the received authentication-verification request comprises displaying a personal identification number (PIN) code entry screen.

11. The user device (110) of Claim 9 or Claim 10, wherein the mobile application comprises instructions for:
receiving a user selection of a payment option of the plurality of selectable payment options.

12. The user device (110) of any of Claims 9 to 11, wherein the mobile application comprises instructions for:
receiving a user approval of the transaction-approval request.

13. The user device (110) of any of Claims 9 to 12, wherein the mobile application comprises instructions for at least one of:
receiving confirmation of an approved transaction from the merchant platform; and
displaying a push notification message indicating completion of a payment transaction on the user interface.

14. The user device (110) of any of Claims 9 to 13, wherein the mobile application comprises instructions for:
providing identifiers of payment providers registered on the user device to display the payment providers as the selected payment options during the transaction between the user device and the merchant platform.

15. A payment transaction system (100) comprising:
a merchant portal (120) to facilitate transactions;
a user device (110) in communication with the merchant portal (120), wherein the user device (110) is associated with a user;
a payment provider (140) connected to a plurality of financial institutions (150), wherein the user is associated with the payment provider (140) via a user account, wherein the user device (110) displays the payment provider (140) as a payment option during a transaction with the merchant portal (120); and
an acquirer (130) associated with the merchant portal (120) to facilitate payments of users undertaking the transaction with the merchant portal (120), the acquirer (130) connected to the payment provider to facilitate a payment for the transaction to be completed by the payment provider on behalf of the user, the acquirer (130) configured to perform the method (300) of any of claims 1 to 8.

## Patentansprüche

1. Computerimplementiertes Verfahren (300) für eine automatisierte einheitliche Transaktionserfahrung, die von einem Erwerber ermöglicht wird, wobei das Verfahren (300) Folgendes umfasst:
Empfangen (305) eines Datenobjekts durch den Erwerber, das eine Auswahl eines Zahlungsanbieters durch einen Benutzer auf einem Benutzergerät darstellt, um eine Zahlungstransaktion im Auftrag des Benutzers mit einem Händler während einer Live-Transaktion zwischen dem Händler und dem Benutzergerät durchzuführen, wobei das Datenobjekt Folgendes umfasst:
eine erste eindeutige Kennung, die mit dem Benutzer verknüpft ist;
eine zweite eindeutige Kennung, die mit dem Zahlungsanbieter verknüpft ist; sowie Transaktionsinformationen, die mit der Live-Transaktion verknüpft sind;
Aufbauen (310) einer verschlüsselten Verbindung zwischen dem Erwerber und dem Zahlungsanbieter durch den Erwerber, wobei die verschlüsselte Verbindung bis zum Abschluss der Zahlungstransaktion aufrechterhalten wird;
Übermitteln (315) des Datenobjekts an den Zahlungsanbieter durch den Erwerber über die verschlüsselte Verbindung;
Empfangen (320) einer Transaktionsgenehmigungsanforderung vom Zahlungsanbieter durch den Erwerber über die verschlüsselte Verbindung, basierend auf dem Datenobjekt;
Übermitteln (325) der Transaktionsgenehmigungsanforderung durch den Erwerber über einen Online-Händler an das Benutzergerät zur Anzeige als Push-Benachrichtigung;
Übermitteln (330), durch den Erwerber über die verschlüsselte Verbindung, einer Benutzerantwort auf die Transaktionsgenehmigungsanforderung an den Zahlungsanbieter;
Empfangen (335) einer Authentifizierungsanforderung vom Zahlungsanbieter durch den Erwerber über die verschlüsselte Verbindung;
Übermitteln (340) von Benutzerauthentifizierungs-Überprüfungsinformationen an den Zahlungsanbieter durch den Erwerber über die verschlüsselte Verbindung, um die Zahlungstransaktion abzuschließen; und
Übermitteln (345) einer Nachricht, die den Abschluss der Zahlungstransaktion anzeigt durch den Erwerber über den Händler an das Benutzergerät, zur Anzeige als Push-Benachrichtigung auf dem Benutzergerät.

2. Computerimplementiertes Verfahren (300) nach Anspruch 1, wobei die Transaktionsinformation mindestens einen Transaktionsbetrag oder eine Gegenstandsinformation umfasst, wobei die Gegenstandsinformation mindestens eine Ware oder eine Dienstleistung zum Verkauf oder Kauf beschreibt.

3. Computerimplementiertes Verfahren (300) nach Anspruch 1 oder Anspruch 2, ferner Folgendes umfassend:
Empfangen einer Antwort auf eine Transaktionsgenehmigungsanforderung vom Benutzergerät durch den Erwerber.

4. Computerimplementiertes Verfahren (300) nach einem der vorhergehenden Ansprüche, das des Weiteren Folgendes umfasst: Empfangen der Benutzerauthentifizierungs-Überprüfungsinformationen vom Benutzergerät durch den Erwerber.

5. Computerimplementiertes Verfahren (300) nach einem der vorhergehenden Ansprüche, wobei die Benutzerauthentifizierungs-Überprüfungsinformation eine persönliche Identifikationsnummer (PIN) umfasst, die dem Zahlungsanbieter zugeordnet ist.

6. Computerimplementiertes Verfahren (300) nach einem der vorangehenden Ansprüche, das des Weiteren Folgendes umfasst: Abrufen von Kennungen von Zahlungsanbietern durch den Erwerber über den Händler, die auf dem Benutzergerät registriert sind.

7. Computerimplementiertes Verfahren (300) nach Anspruch 6, ferner Folgendes umfassend: Senden von Informationen an das Benutzergerät durch den Erwerber, um die auf dem Benutzergerät registrierten Zahlungsanbieter anzuzeigen.

8. Computerimplementiertes Verfahren (300) nach einem der vorangehenden Ansprüche, ferner Folgendes umfassend: Empfangen (542) einer Bestätigung des erfolgreichen Abschlusses der Zahlungstransaktion vom Zahlungsanbieter durch den Erwerber über die verschlüsselte Verbindung, und Beenden (547) der verschlüsselten Verbindung zwischen dem Erwerber und dem Zahlungsanbieter durch den Erwerber.

9. Benutzergerät (110), Folgendes umfassend:
eine drahtlose Schnittstelle in Verbindung mit einer Händlerplattform, wobei die Händlerplattform einen integrierten Erwerber umfasst;
einen Prozessor in Kommunikationsverbindung mit der drahtlosen Schnittstelle; und
einen Speicher in Kommunikationsverbindung mit dem Prozessor, wobei der Speicher eine mobile Anwendung umfasst, wobei die mobile Anwendung Anweisungen umfasst, die durch den Prozessor auszuführen sind, Folgendes umfassend:
Anzeigen einer Vielzahl von auswählbaren Zahlungsoptionen auf einer Benutzeroberfläche, wobei jede Zahlungsoption der Vielzahl von auswählbaren Zahlungsoptionen einen Zahlungsanbieter darstellt;
Übertragen eines Datenobjekts, das eine Benutzerauswahl einer Zahlungsoption der Vielzahl von auswählbaren Zahlungsoptionen darstellt, an eine Händlerplattform während einer Transaktion zwischen der Händlerplattform und dem Benutzergerät, wobei das Datenobjekt Folgendes umfasst:
eine erste eindeutige Kennung, die einem Benutzer zugeordnet ist; und
eine zweite eindeutige Kennung, die mit dem Zahlungsanbieter verbunden ist;
Anzeigen einer empfangenen Push-Benachrichtigung von der Händlerplattform auf der Benutzeroberfläche, wobei die empfangene Push-Benachrichtigung eine Transaktionsgenehmigungsanforderung umfasst;
Übertragen einer Benutzerantwort auf die Transaktionsgenehmigungsanforderung an die Händlerplattform;
Anzeigen einer empfangenen Authentifizierungsüberprüfungsanforderung auf der Benutzeroberfläche; und
Übertragen eingegebener Benutzerauthentifizierungs-Überprüfungsinformationen als Reaktion auf die empfangene Authentifizierungs-Überprüfungsanforderung an die Händlerplattform.

10. Benutzergerät (110) nach Anspruch 9, wobei das Anzeigen der empfangenen Authentifizierungs-Überprüfungsanforderung das Anzeigen eines Eingabebildschirms für eine persönliche Identifikationsnummer (PIN) umfasst.

11. Benutzergerät (110) nach Anspruch 9 oder Anspruch 10, wobei die mobile Anwendung Anweisungen für Folgendes umfasst:
Empfangen einer Benutzerauswahl einer Zahlungsoption der Vielzahl von auswählbaren Zahlungsoptionen.

12. Benutzergerät (110) nach einem der Ansprüche 9 bis 11, wobei die mobile Anwendung Anweisungen umfasst für:
das Empfangen einer Benutzergenehmigung der TransaktionsGenehmigungsanforderung.

13. Benutzergerät (110) nach einem der Ansprüche 9 bis 12, wobei die mobile Anwendung Anweisungen für mindestens eines der Folgenden umfasst:
Empfangen einer Bestätigung einer genehmigten Transaktion von der Händlerplattform; und
Anzeigen einer Push-Benachrichtigungsmeldung, die den Abschluss einer Zahlungstransaktion auf der Benutzeroberfläche anzeigt.

14. Benutzergerät (110) nach einem der Ansprüche 9 bis 13, wobei die mobile Anwendung Anweisungen umfasst für:
das Bereitstellen von Kennungen von Zahlungsanbietern, die auf dem Benutzergerät registriert sind, um die Zahlungsanbieter als die ausgewählten Zahlungsoptionen während der Transaktion zwischen dem Benutzergerät und der Händlerplattform anzuzeigen.

15. Zahlungstransaktionssystem (100), umfassend:
ein Händlerportal (120), um Transaktionen zu erleichtern;
ein Benutzergerät (110), das in Kommunikation mit dem Händlerportal (120) steht, wobei das Benutzergerät (110) einem Benutzer zugeordnet ist;
einen Zahlungsanbieter (140), der mit einer Vielzahl von Finanzinstituten (150) verbunden ist, wobei der Benutzer dem Zahlungsanbieter (140) über ein Benutzerkonto zugeordnet ist, wobei das Benutzergerät (110) den Zahlungsanbieter (140) während einer Transaktion mit dem Händlerportal (120) als Zahlungsoption anzeigt; und
einen Erwerber (130), der mit dem Händlerportal (120) verbunden ist, um Zahlungen von Benutzern zu erleichtern, die die Transaktion mit dem Händlerportal (120) vornehmen, wobei der Erwerber (130) mit dem Zahlungsanbieter verbunden ist, um eine Zahlung für die Transaktion zu erleichtern, die durch den Zahlungsanbieter im Auftrag des Benutzers abgeschlossen werden soll, wobei der Erwerber (130) dazu konfiguriert ist, das Verfahren (300) nach einem der Ansprüche 1 bis 8 durchzuführen.

## Revendications

1. Procédé mis en œuvre par ordinateur (300) pour une expérience de transaction uniforme automatisée facilitée par un acquéreur, le procédé (300) comprenant :
la réception (305), par l'acquéreur, d'un objet de données représentant une sélection d'un fournisseur de paiement par un utilisateur sur un dispositif utilisateur pour effectuer une transaction de paiement pour le compte de l'utilisateur avec un commerçant pendant une transaction en direct entre le commerçant et le dispositif utilisateur, l'objet de données comprenant :
un premier identifiant unique associé à l'utilisateur ;
un deuxième identifiant unique associé au fournisseur de paiement ; et des informations de transaction associées à la transaction en direct ;
l'établissement (310), par l'acquéreur, d'une connexion chiffrée entre l'acquéreur et le fournisseur de paiement, la connexion chiffrée étant maintenue jusqu'à l'achèvement de la transaction de paiement ;
l'envoi par technologie « push » (315), par l'acquéreur, sur la connexion chiffrée, de l'objet de données au fournisseur de paiement ;
la réception (320), par l'acquéreur sur la connexion chiffrée, d'une demande d'approbation de transaction provenant du fournisseur de paiement sur la base de l'objet de données ;
l'envoi par technologie « push » (325), par l'acquéreur, de la demande d'approbation de transaction via un commerçant en ligne vers le dispositif utilisateur pour affichage en tant que notification push ;
l'envoi par technologie « push » (330), par l'acquéreur sur la connexion chiffrée, d'une réponse d'utilisateur à la demande d'approbation de transaction, au fournisseur de paiement ;
la réception (335), par l'acquéreur sur la connexion chiffrée, d'une demande d'authentification provenant du fournisseur de paiement ;
l'envoi par technologie « push » (340), par l'acquéreur sur la connexion chiffrée, d'informations de vérification d'authentification d'utilisateur au fournisseur de paiement pour réaliser la transaction de paiement ; et
l'envoi par technologie « push » (345), par l'acquéreur via le commerçant, vers le dispositif utilisateur d'un message indiquant l'achèvement de la transaction de paiement pour affichage en tant que notification push sur le dispositif utilisateur.

2. Procédé mis en œuvre par ordinateur (300) selon la revendication 1, dans lequel les informations de transaction comprennent au moins l'un parmi un montant de transaction ou des informations d'article, dans lequel les informations d'article décrivent au moins l'un parmi un bien ou un service à vendre ou à acheter.

3. Procédé mis en œuvre par ordinateur (300) selon la revendication 1 ou la revendication 2, comprenant en outre :
la réception, par l'acquéreur, d'une réponse à une demande d'approbation de transaction provenant du dispositif utilisateur.

4. Procédé mis en œuvre par ordinateur (300) selon une quelconque revendication précédente, comprenant en outre : la réception, par l'acquéreur, des informations de vérification d'authentification d'utilisateur provenant du dispositif utilisateur.

5. Procédé mis en œuvre par ordinateur (300) selon une quelconque revendication précédente, dans lequel les informations de vérification d'authentification d'utilisateur comprennent un numéro d'identification personnel (PIN), numéro associé au fournisseur de paiement.

6. Procédé mis en œuvre par ordinateur (300) selon une quelconque revendication précédente, comprenant en outre :
la récupération par technologie « pull », par l'acquéreur, via le commerçant, d'identifiants de fournisseurs de paiement enregistrés sur le dispositif utilisateur.

7. Procédé mis en œuvre par ordinateur (300) selon la revendication 6, comprenant en outre :
l'envoi, par l'acquéreur, d'informations au dispositif utilisateur pour afficher les fournisseurs de paiement enregistrés sur le dispositif utilisateur.

8. Procédé mis en œuvre par ordinateur (300) selon une quelconque revendication précédente, comprenant en outre :
la réception (542), par l'acquéreur, sur la connexion chiffrée, de la confirmation de l'achèvement réussi de la transaction de paiement en provenance du fournisseur de paiement ; et
l'interruption (547), par l'acquéreur, de la connexion chiffrée entre l'acquéreur et le fournisseur de paiement.

9. Dispositif utilisateur (110) comprenant :
une interface non filaire en communication avec une plateforme marchande, dans lequel la plateforme marchande comprend un acquéreur intégré ;
un processeur en communication avec l'interface non filaire ; et
une mémoire en communication avec le processeur, la mémoire comprend une application mobile, dans lequel l'application mobile comprend des instructions devant être exécutées par le processeur, comprenant :
l'affichage, sur une interface utilisateur, d'une pluralité d'options de paiement sélectionnables, chaque option de paiement parmi la pluralité d'options de paiement sélectionnables représentant un fournisseur de paiement ;
l'envoi par technologie « push », d'un objet de données, représentant une sélection par un utilisateur d'une option de paiement parmi la pluralité d'options de paiement sélectionnables, vers une plateforme marchande pendant une transaction entre la plateforme marchande et le dispositif utilisateur, l'objet de données comprenant :
un premier identifiant unique associé à un utilisateur ; et
un deuxième identifiant unique associé au fournisseur de paiement ;
l'affichage, sur l'interface utilisateur, d'une notification push reçue en provenance de la plateforme marchande, dans lequel la notification push reçue comprend une demande d'approbation de transaction ;
l'envoi par technologie « push » d'une réponse d'utilisateur à la demande d'approbation de transaction vers la plateforme marchande ;
l'affichage, sur l'interface utilisateur, d'une demande de vérification d'authentification reçue ; et
l'envoi par technologie « push » des informations de vérification d'authentification saisies par l'utilisateur, en réponse à la demande de vérification d'authentification reçue, vers la plateforme marchande.

10. Dispositif utilisateur (110) selon la revendication 9, dans lequel l'affichage de la demande de vérification d'authentification reçue comprend l'affichage d'un écran de saisie d'un numéro d'identification personnel (PIN).

11. Dispositif utilisateur (110) selon la revendication 9 ou la revendication 10, dans lequel l'application mobile comprend des instructions pour :
la réception d'une sélection d'utilisateur d'une option de paiement parmi la pluralité d'options de paiement sélectionnables.

12. Dispositif utilisateur (110) selon l'une quelconque des revendications 9 à 11, dans lequel l'application mobile comprend des instructions pour :
la réception d'une approbation d'utilisateur de la demande d'approbation de transaction.

13. Dispositif utilisateur (110) selon l'une quelconque des revendications 9 à 12, dans lequel l'application mobile comprend des instructions pour au moins l'un parmi :
la réception de la confirmation d'une transaction approuvée en provenance de la plateforme marchande ; et
l'affichage d'un message de notification push indiquant l'achèvement d'une transaction de paiement sur l'interface utilisateur.

14. Dispositif utilisateur (110) selon l'une quelconque des revendications 9 à 13, dans lequel l'application mobile comprend des instructions pour :
la fourniture d'identifiants de fournisseurs de paiement enregistrés sur le dispositif utilisateur afin d'afficher les fournisseurs de paiement en tant qu'options de paiement sélectionnées pendant la transaction entre le dispositif utilisateur et la plateforme marchande.

15. Système de transactions de paiement (100) comprenant :
un portail marchand (120) pour faciliter les transactions ;
un dispositif utilisateur (110) en communication avec le portail marchand (120), dans lequel le dispositif utilisateur (110) est associé à un utilisateur ;
un fournisseur de paiement (140) connecté à une pluralité d'institutions financières (150), dans lequel l'utilisateur est associé au fournisseur de paiement (140) par l'intermédiaire d'un compte utilisateur, dans lequel le dispositif utilisateur (110) affiche le fournisseur de paiement (140) en tant qu'option de paiement pendant une transaction avec le portail marchand (120) ; et
un acquéreur (130) associé au portail marchand (120) pour faciliter les paiements d'utilisateurs effectuant la transaction avec le portail marchand (120), l'acquéreur (130) étant connecté au fournisseur de paiement pour faciliter un paiement pour la transaction devant être effectuée par le fournisseur de paiement pour le compte de l'utilisateur, l'acquéreur (130) étant configuré pour réaliser le procédé (300) de l'une quelconque des revendications 1 à 8.
